# EUROPEAN PATENT SPECIFICATION

(11) **EP 1 467 892 B1**
(45) Date of publication and mention of the grant of the patent: **30.11.2005**
(21) Application number: 02792142.8
(22) Date of filing: 13.12.2002
(51) Int. Cl.: B62D 33/06

(54) **POST COVERING FOR A VEHICLE AND A METHOD OF REPLACING A VEHICLE WINDSCREEN**
SÄULENABDECKUNG FÜR EIN FAHRZEUG UND VERFAHREN ZUM AUSTAUSCHEN EINER FAHRZEUGWINDSCHUTZSCHEIBE
HABILLAGE DE MONTANT POUR VEHICULE ET PROCEDE DE REMPLACEMENT DE PARE-BRISE

(30) Priority: 27.12.2001 SE 0104390
(43) Date of publication of application: 20.10.2004
(73) Proprietor: Scania CV AB, 151 87 Södertälje (SE)
(72) Inventor: LARSSON, Mikael, S-151 46 Södertälje (SE)
(74) Representative: Sjögren, Stina
(86) International application number: PCT/SE2002/002315
(87) International publication number: WO 2003/062017

(56) References cited:
- EP-A1- 0 553 639
- EP-A1- 0 829 393
- EP-A2- 0 419 072
- DE-A1- 4 116 835
- JP-A- 9 039 833

## Description

### Technical field

The present invention relates to a post covering for a vehicle.

### Background

Heavy vehicles, e.g. trucks, often have a driver's cab which incorporates posts to which the vehicle's windscreen and the hinges for the cab doors are fastened.

Such vehicles are often provided with post covering which covers the aforesaid posts on the outside of a cab in order to protect the posts from external damage. Moreover, the cladding, which is usually made of plastic, may be in various colours and shapes and thereby enhance the appearance of the vehicle.

Generally known are post coverings which comprise a plastic housing which covers said posts and in which holes are arranged for door hinges. Said plastic housing also covers the vehicle's windscreen in such a way that the plastic housing has to be removed to enable the windscreen to be replaced. The problem in such cases is that the doors of the vehicle have to be removed first before the plastic housing can be removed.

An example of a post covering for a vehicle is referred to in DE 197 54 825 A1 which refers to a post for a vehicle with post covering on the interior side of the post and an airbag built-in under this interior-side post covering, whereby a wall thickness reduction of the post covering serves an hinge whereby, when the airbag is triggered, the post covering breaks at the wall thickness reduction so that the airbag can expand. In addition, the post covering is stable until it breaks at the wall thickness reduction and its stability is such that not only does it maintain its shape while being fitted to the pillar, but after fitting it also maintains its shape even under the influence of external forces until the airbag is triggered.

### Brief description of the invention

The problem that the post covering also covers the vehicle's windscreen in such a way that the cab doors have to be removed before the windscreen can be replaced is solved according to the invention by arranging a post covering which incorporates in the region around the cutouts for the door hinges at least a first thinning of material whereby a portion of the post covering is intended to be moved from its original position.

The fact that the post covering incorporates the features in claim 1 results in the advantage of being able to replace the vehicle's windscreen without having to remove the doors of the vehicle's cab, thereby making large time, labour and cost savings possible when replacing the windscreen.

### Brief list of the drawings

The invention will now be illustrated in more detail below with reference to the attached drawings, in which:
Figure 1 depicts schematically a view of a driver's cab for a heavy vehicle,
Figure 2 depicts schematically part of a partly sectional view of a post covering arrangement according to a first embodiment of the invention, and
Figure 3 depicts schematically part of a partly sectional view of a post covering arrangement according to a second embodiment of the invention.

### Description of preferred embodiments

The invention is only described below with respect to one side of the cab (the left side) and hence with respect to only one cab door and its hinges, one post and consequently one post covering, so for the sake of clarity it is here stated that the other side of the cab (the right side) is constituted in the same manner as the first side of the cab (the left side). The arrangement is thus symmetrical about a vertical plane through the middle of the vehicle in its longitudinal direction, so only one (the left) portion is depicted.

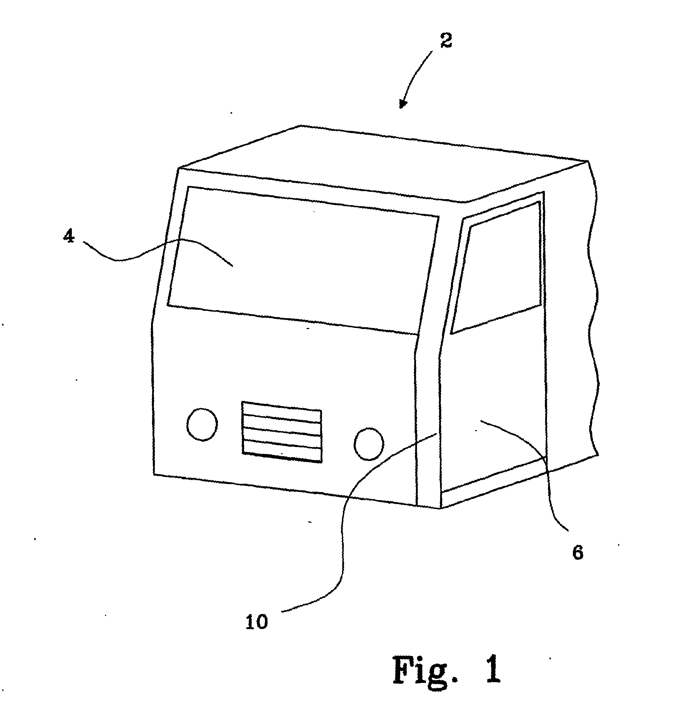

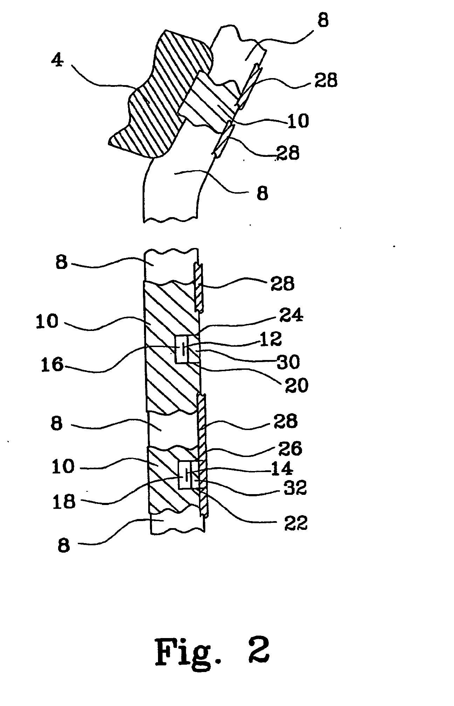

Figure 1 depicts schematically a view of a driver's cab 2 for a heavy vehicle, e.g. a truck or a bus, which cab 2 comprises inter alia a windscreen 4, two cab doors each arranged on their respective sides of the cab 2 (only one of them, the left cab door 6, is depicted), two pillars each arranged on their respective sides of the cab 2 (only one of them, the left post8, is partly depicted in the lower part of Figure 2), and two post coverings each arranged on their respective sides of the cab 2 (only one, the left post covering 10, is depicted) for said two pillars 8. The hinges 12,14 (depicted in the lower part of Figure 2) for one door 6 of the cab are fastened to the one pillar 8, and the hinges for the other door of the cab are fastened to the other post.

Figure 2 depicts schematically part of a partly sectional view of a post covering arrangement according to a first embodiment of the invention. The post covering 10 which covers the post 8 on the outside of the latter (and consequently also on the outside of the cab 2) comprises preferably a plastic housing and is intended to protect the post from external damage while at the same time enhancing the appearance of the vehicle through the possibility of it being in various colours and shapes. At least one but preferably two cutouts 16,18 for the door hinges 12,14 is/are arranged in the post covering 10. The post covering 10 also covers the vehicle's windscreen 4 in such a way that the post covering 10 has to be removed to enable the windscreen 4 to be replaced.

Arranging a post covering 10 incorporating at least a first thinning of material 20,22 in the region around the cutout 16 or, where applicable, the cutouts 16,18 for the door hinges 12,14, at which first thinning of material 20,22 a portion 30,32 of the post covering 10 is intended to be moved from its original position, means that the windscreen 4 can be replaced in a manner described below without the doors 6 of the vehicle's cab 2 having to be removed, thereby making large time, labour and cost savings possible when replacing the windscreen 4.

The invention thus relates to a vehicle post covering 10 which incorporates at least one cutout 16,18 for a hinge 12,14 for a vehicle door 6 and at least a first thinning of material 20,22 in the region around the cutout 16,18 for the hinge 12,14 of the vehicle door 6, at which first thinning of material 20,22 a portion 30,32 of the post covering 10 is intended to be moved from its original position.

The post covering 10 preferably also incorporates a second thinning of material 24,26 in the region around the cutout 16,18 for the vehicle door hinge 12,14, which second thinning of material 24,26 acts as an hinge in a way described in more detail below. However, this second thinning of material 24,26 is not necessary, since the portion 30,32 of the post covering 10 which is intended to be moved from its original position can be moved from its original position even if there is no such second thinning of material 24,26, by the portion 30,32 moved from its original position being subjected to elastic bending.

A strip 28 is preferably fastened to the post 8, which strip 28 is arranged to hold the post covering 10 against the post 8 in a manner described in more detail below. Said strip 28 is preferably made of rubber.

A method for replacement of the windscreen 4 of a vehicle, which vehicle is provided with a post covering 10 incorporating at least one cutout 16,18 for a hinge 12,14 for a vehicle door 6, whereby the post covering 10 also incorporates at least one first thinning of material 20,22 in the region around the cutout 16,18 for the hinge 12,14 of the vehicle door 6, comprises the following steps:
- moving a portion 30,32 of the post covering 10 from its original position,
- removing the post covering 10,
- removing the windscreen 4,
- fitting another windscreen,
- refitting said post covering 10, and
- refitting in substantially its original position the portion 30,32 of the post covering 10 which was moved from its original position.

In cases where a post covering 10 according to the first embodiment, i.e. with a thinning of material which is not so great as to result in the formation of a slit through the post covering, is used, cutting of the post covering 10 in the region around the cutout 16,18 for the hinge 12,14 of the vehicle door 6 is effected before the folding clear of a portion 30,32 of the post covering 10 as above can take place. Examples of equivalent methods for cutting the post covering 10, depending on the latter's thickness, comprise tearing, shearing, cutting with a knife, sawing etc.

Moving a portion 30,32 of the post covering 10 from its original position and back as above is preferably effected along a second thinning of material 24,26 in the region around the cutout 16,18 for the hinge 12,14 of the vehicle door 6, in which case said second thinning of material 24,26 serves as an hinge.

A strip 28 is preferably fastened to the post 8, which strip 28 is arranged to hold the post covering 10 against the post 8 by the post covering 10 being placed, when moved back as described above, in between the post 8 and the strip 28.

The aforesaid post covering 10 is thus well-suited for use with respect to replacing a windscreen 4 of a vehicle.

For the sake of clarity, it should also be mentioned that the method according to the claims also comprises a method for replacing a windscreen 4 of a vehicle, which vehicle is provided with a post covering 10 with neither a first nor a second thinning of material, which post covering 10 incorporates at least one cutout 16,18 for a hinge 12,14 for a vehicle door 6 and incorporates at least a portion 30,32;34,36 of the post covering 10 which has to be moved from its original position for it to be possible to remove the post covering 10 without first having to remove the doors 6 of the vehicle's cab 2. In cases where a post covering 10 of this kind, i.e. with no thinning of material, is used, cutting of the post covering 10 in the region around the cutout 16,18 for the hinge 12,14 of the vehicle door 6 is effected before the folding clear of a portion 30,32 of the post covering 10 as above can take place.

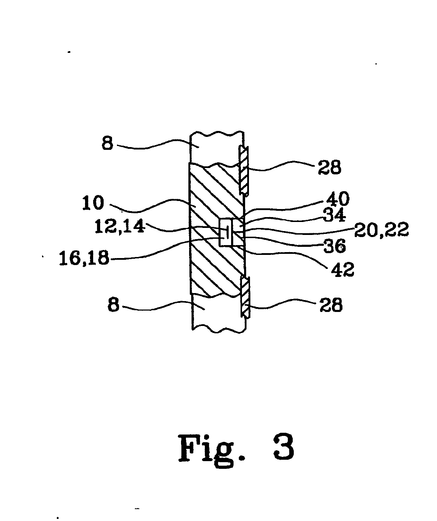

Figure 3 depicts schematically part of a partly sectional view of a post covering arrangement according to a second embodiment of the invention which relates to a vehicle post covering 10 which incorporates at least one cutout 16,18 for a hinge 12,14 for a vehicle door 6 and at least one first thinning of material 20,22 in the region around the cutout 16,18 for the hinge 12,14 of the vehicle door 6. The second embodiment differs from the first embodiment in that the second embodiment has at the first thinning of material 20,22 a portion 34,36 of the post covering 10, which portion 34,36 is divided into several units 34 and 36 respectively and is intended to be moved from its original position. The second embodiment also differs from the first embodiment in that in the second embodiment the post covering 10 preferably also incorporates two second thinnings of material 40,42 in the region around the cutout 16,18 for the vehicle door hinge 12,14, which second thinnings of material 40,42 serve as hinges.

A third embodiment which is not depicted in a drawing of its own but is instead described below with reference to differences between it and the previously described first embodiment differs from the first embodiment according to Figure 2 in that the third embodiment has in the post covering 10 a first thinning of material 20,22 which is so great as to result in the formation of a slit 20,22 through the post covering 10.

According to the embodiments described above, a strip 28 is used for holding the post covering 10 against the post 8. It is also possible to arrange a device of some other kind, such as a clamp, an adhesive, a screw or some other fastening element for holding the post covering 10 against the post 8. If the cab belongs to a bus, a single cab door 6 may also be arranged on the cab 2 instead of the two doors mentioned above. It is also possible for more than two doors 6 to be arranged on the cab 2. The aforesaid embodiments may also be combined, e.g. by the possibility that a first thinning of material as described in one embodiment, at which thinning portions of the post covering can be moved apart from other portions of the post covering, and which thinning according to said embodiment is not so great as to result in the formation of a slit in the material, might be arranged in the form of a slit.

## Claims

1. A post covering for a vehicle whereby the post covering (10) incorporates at least one cutout (16,18) for a hinge (12,14) for a vehicle door (6), **characterised in that** the post covering (10) incorporates at least a first thinning of material (20,22) in the region around the cutout (16,18) for the hinge (12,14) of the vehicle door (6), at which first thinning of material (20,22) a portion (30,32;34,36) of the post covering (10) is intended to be moved from its original position so that the vehicle's windscreen (4) can be replaced without having to remove the vehicle door (6).

2. A post covering for a vehicle according to claim 1, **characterised in that** the post covering (10) incorporates at least a first thinning of material (20,22) in the region around the cutout (16,18) for the hinge (12,14) of the vehicle door (6), at which first thinning of material (20,22) the post covering (10) is intended to be cut, after which a portion (30,32;34,36) of the post covering (10) is intended to be moved from its original position.

3. A post covering for a vehicle according to either of claims 1 and 2,
**characterised by** incorporating at least one second thinning of material (24,26;40,42) in the region around the cutout (16,18) for the hinge (12,14) of the vehicle door (6), which second thinning of material (24,26;40,42) serves as an hinge.

4. A post covering for a vehicle according to any one of claims 1 to 3,
**characterised in that** a strip (28) is fastened to a post (8) of a vehicle, which strip (28) is arranged to hold the post covering (10) against the post (8).

5. A post covering for a vehicle according to claim 4, **characterised in that** the strip (28) is made of rubber.

6. A post covering for a vehicle according to any one of the foregoing claims, **characterised in that** the post covering (10) comprises a housing made of plastic.

7. A post covering for a vehicle according to any one of the foregoing claims, **characterised in that** the post covering (10) incorporates a first thinning of material (20,22) which is not so great as to result in the formation of a slit (20,22) through the post covering (10).

8. A post covering for a vehicle according to any one of claims 1 to 6, **characterised in that** the post covering (10) incorporates a first thinning of material (20,22) which is great enough to result in the formation of a slit (20,22) through the post covering (10).

9. A method for replacing a windscreen (4) of a vehicle, which vehicle is provided with a post covering (10) which incorporates at least one cutout (16,18) for a hinge (12,14) for a vehicle door (6), **characterised by** the following steps:
- moving a portion (30,32;34,36) of the post covering (10) from its original position, the portion being positionned near a door hinge,
- removing the post covering (10),
- removing the windscreen (4),
- fitting another windscreen,
- refitting said post covering (10), and
- refitting in substantially its original position the portion (30,32;34,36) of the post covering (10) which was moved from its original position.

10. A method for replacing a windscreen of a vehicle according to claim 9,
**characterised in that** cutting of the post covering (10) in the region around the cutout (16,18) for the hinge (12,14) of the vehicle door (6) is effected before the folding clear of a portion (30,32;34,36) of the post covering (10) as above takes place.

11. A method for replacing a windscreen of a vehicle according to claim 10,
**characterised in that** cutting of the post covering (10) in the region around the cutout (16,18) as above takes place at a first thinning of material (20,22).

12. A method for replacing a windscreen of a vehicle according to any one of claims 9 to 11, **characterised in that** moving a portion (30,32;34,36) of the post covering (10) from its original position and back as above takes place along a second thinning of material (24,26;40,42) in the region around the cutout (16,18) for the hinge (12,14) of the vehicle door (6), whereby said second thinning of material (24,26;40,42) serves as an hinge.

13. A method for replacing a windscreen of a vehicle according to any one of claims 9 to 12, **characterised in that** on the occasion of the aforesaid moving back the post covering (10) is placed in between a post (8) and a strip (28) in order to hold the post covering (10) against the post (8).

14. A vehicle cab **characterised by** incorporating a post covering (10) according to any one of claims 1 to 8.

## Patentansprüche

1. Säulenverkleidung für ein Fahrzeug, wobei die Säulenverkleidung (10) wenigstens eine Ausnehmung (16, 18) für ein Gelenk (12, 14) für eine Fahrzeugtür (6) umfasst,
**dadurch gekennzeichnet, dass** die Säulenverkleidung (10) wenigstens eine erste Materialstärkenreduzierung (20, 22) im Bereich um die Ausnehmung (16, 18) für das Gelenk (12, 14) der Fahrzeugtür (6) herum aufweist, wobei an der ersten Materialstärkenreduzierung (20, 22) ein Abschnitt (30, 32; 34, 36) der Säulenverkleidung (10) dazu vorgesehen, aus seiner ursprünglichen Position derart wegbewegt zu werden, dass die Windschutzscheibe (4) des Fahrzeugs entfernt werden kann, ohne die Fahrzeugtür (6) entfernen zu müssen.

2. Säulenverkleidung für ein Fahrzeug nach Anspruch 1,
**dadurch gekennzeichnet, dass** die Säulenverkleidung (10) wenigstens eine erste Materialstärkenreduzierung (20, 22) im Bereich um die Ausnehmung (16, 18) für das Gelenk (12, 14) der Fahrzeugtür (6) herum aufweist, wobei an der ersten Materialstärkenreduzierung (20, 22) ein Schnitt in der Säulenverkleidung vorgesehen ist, woraufhin ein Abschnitt (30, 32; 34, 36) der Säulenverkleidung (10) dazu vorgesehen ist, aus seiner ursprünglichen Position wegbewegt zu werden.

3. Säulenverkleidung für ein Fahrzeug nach einem der Ansprüche 1 oder 2,
**gekennzeichnet durch** wenigstens eine zweite Materialstärkenreduzierung (24, 26; 40, 42) im Bereich um die Ausnehmung (16, 18) für das Gelenk (12, 14) der Fahrzeugtür (6) herum, wobei die zweite Materialstärkenreduzierung (24, 26; 40, 42) als ein Gelenk dient.

4. Säulenverkleidung für ein Fahrzeug nach einem der Ansprüche 1 bis 3,
**dadurch gekennzeichnet, dass** ein Streifen (28) an einer Säule (8) eines Fahrzeugs befestigt ist, wobei der Streifen (28) derart angeordnet ist, dass er die Säulenverkleidung (10) an der Säule (8) hält.

5. Säulenverkleidung für ein Fahrzeug nach Anspruch 4,
**dadurch gekennzeichnet, dass** der Streifen (28) aus Gummi hergestellt ist.

6. Säulenverkleidung für ein Fahrzeug nach einem der vorangehenden Ansprüche,
**dadurch gekennzeichnet, dass** die Säulenverkleidung (10) ein aus Kunststoff hergestelltes Gehäuse umfasst.

7. Säulenverkleidung für ein Fahrzeug nach einem der vorangehenden Ansprüche,
**dadurch gekennzeichnet, dass** die Säulenverkleidung (10) eine erste Materialstärkenreduzierung (20, 22) aufweist, die nicht derart groß ausgebildet ist, dass sie zu der Ausbildung eines Schlitzes (20, 22) durch die Säulenverkleidung (10) führt.

8. Säulenverkleidung für ein Fahrzeug nach einem der Ansprüche 1 bis 6,
**dadurch gekennzeichnet, dass** die Säulenverkleidung (10) eine erste Materialstärkenreduzierung (20, 22) umfasst, die groß genug ist, dass sie zu der Bildung eines Schlitzes (20, 22) durch die Säulenverkleidung (10) führt.

9. Verfahren zum Ersetzen einer Windschutzscheibe (4) eines Fahrzeugs, wobei das Fahrzeug mit einer Säulenverkleidung (10) versehen ist, die wenigstens eine Ausnehmung (16, 18) für ein Gelenk (12, 14) für eine Fahrzeugtür (6) umfasst, **gekennzeichnet durch** die folgenden Schritte:
- Bewegen eines Abschnitts (30, 32; 34, 36) der Säulenverkleidung (10) aus seiner ursprünglichen Position heraus, wobei die Position nahe einem Türgelenk ausgebildet ist,
- Entfernen der Säulenverkleidung (10),
- Entfernen der Windschutzscheibe (4),
- Einsetzen einer anderen Windschutzscheibe,
- erneutes Anbringen der Säulenverkleidung (10), und
- erneutes Anbringen des Abschnitts (30, 32; 34, 36) der Säulenverkleidung (10), der aus seiner ursprünglichen Position entfernt wurde, im Wesentlichen in seiner ursprüngliche Position.

10. Verfahren zum Ersetzen einer Windschutzscheibe eines Fahrzeugs nach Anspruch 9,
**dadurch gekennzeichnet, dass** ein Einschneiden der Säulenverkleidung (10) im Bereich um die Ausnehmung (16, 18) für das Gelenk (12, 14) der Fahrzeugtür (6) herum durchgeführt wird, bevor das Aufklappen eines Teils (30, 32; 34, 36) der Säulenverkleidung (10) wie oben erwähnt stattfindet.

11. Verfahren zum Ersetzen einer Windschutzscheibe eines Fahrzeugs nach Anspruch 10,
**dadurch gekennzeichnet, dass** ein Einschneiden der Säulenverkleidung (10) in dem Bereich um die Ausnehmung (16, 18) herum wie vorstehend erwähnt an einer ersten Materialstärkenreduzierung (20, 22) stattfindet.

12. Verfahren zum Ersetzen einer Windschutzscheibe eines Fahrzeugs nach einem der Ansprüche 9 bis 11,
**dadurch gekennzeichnet, dass** ein Bewegen eines Abschnitts (30, 32; 34, 36) der Säulenverkleidung (10) aus seiner ursprünglichen Position heraus und zurück gemäß Vorstehendem entlang einer zweiten Materialstärkenreduzierung (24, 26; 40, 42) im Bereich um die Ausnehmung (16, 18) für das Gelenk (12, 14) der Fahrzeugtür (6) herum stattfindet, wobei die zweite Materialstärkenreduzierung (24, 26; 40, 42) als ein Gelenk dient.

13. Verfahren zum Ersetzen einer Windschutzscheibe eines Fahrzeugs nach einem der Ansprüche 9 bis 12,
**dadurch gekennzeichnet, dass** die Säulenverkleidung (10) während der vorstehend erwähnten Bewegung zurück zwischen einer Säule (8) und einem Streifen (28) positioniert wird, um die Säulenverkleidung (10) in der Säule (8) zu halten.

14. Fahrzeugkabine, **gekennzeichnet durch** eine Säulenverkleidung (10) nach einem der Ansprüche 1 bis 8.

## Revendications

1. Recouvrement de montant pour un véhicule dans lequel le recouvrement de montant (10) comporte au moins une découpe (16, 18) pour une charnière (12, 14) pour une porte de véhicule (6), **caractérisé en ce que** le recouvrement (10) de montant comprend au moins un premier amincissement de matériau (20, 22) dans la région autour de la découpe (16, 18) pour la charnière (12, 14) de la porte (6) du véhicule, premier amincissement de matériau (20, 22) dans lequel une partie (30, 32, 34, 36) du recouvrement (10) de montant est destiné à être déplacée de sa position d'origine de sorte que le pare-brise (4) du véhicule peut être remplacé sans avoir à retirer la porte (6) du véhicule.

2. Recouvrement de montant pour un véhicule selon la revendication 1, **caractérisé en ce que** le recouvrement (10) de montant comprend au moins un premier amincissement de matériau (20, 22) dans la région autour de la découpe (16, 18) pour la charnière (12, 14) de la porte (6) du véhicule, premier amincissement de matériau (20, 22) dans lequel le recouvrement (10) de montant est destiné à être découpé, après quoi une partie (30, 32, 34, 36) du recouvrement (10) de montant est destinée à être déplacée à partir de sa position d'origine.

3. Recouvrement de montant pour un véhicule selon l'une des revendications 1 et 2, **caractérisé en ce qu'**il comprend au moins un second amincissement de matériau (24, 26, 40, 42) dans la région autour de la découpe (16, 18) pour la charnière (12, 14) de la porte (6) du véhicule, lequel second amincissement de matériau (24, 26, 40, 42) sert comme une charnière.

4. Recouvrement de montant pour un véhicule selon l'une quelconque des revendications 1 à 3, **caractérisé en ce qu'**une bande (28) est fixée à un montant (8) d'un véhicule, laquelle bande (28) est agencée pour maintenir le recouvrement (10) de montant contre le montant (8).

5. Recouvrement de montant pour un véhicule selon la revendication 4, **caractérisé en ce que** la bande (28) est constituée de caoutchouc.

6. Recouvrement de montant pour un véhicule selon l'une quelconque des revendications précédentes, **caractérisé en ce que** le recouvrement (10) de montant comprend un logement réalisé en matière plastique.

7. Recouvrement de montant pour un véhicule selon l'une quelconque des revendications précédentes, **caractérisé en ce que** le recouvrement (10) de montant comprend un premier amincissement de matériau (20, 22) qui n'est pas si grand afin de conduire à la formation d'une fente (20, 22) au travers du recouvrement (10) de montant.

8. Recouvrement de montant pour un véhicule selon l'une quelconque des revendications 1 à 6, **caractérisé en ce que** le recouvrement (10) de montant comprend un premier amincissement de matériau (20, 22) qui est suffisamment grand pour conduire à la formation d'une fente (20, 22) au travers du recouvrement (10) de montant.

9. Procédé pour remplacer un pare-brise (4) d'un véhicule, lequel véhicule est muni d'un recouvrement (10) de montant qui comporte au moins une découpe (16, 18) pour une charnière (12, 14) pour une porte de véhicule (6), **caractérisé par** les étapes suivantes :
- le déplacement d'une partie (30, 32, 34, 36) du recouvrement (10) de montant depuis sa position d'origine, la partie étant positionnée près d'une charnière de porte,
- le retrait du recouvrement (10) de montant,
- le retrait du pare-brise (4),
- l'adaptation d'un autre pare-brise (10),
- la remise en place dudit recouvrement (10) de montant, et
- la remise en place sensiblement dans sa position d'origine de la partie (30, 32, 34, 36) du recouvrement (10) de montant qui a été déplacée depuis sa position d'origine.

10. Procédé pour remplacer un pare-brise d'un véhicule selon la revendication 9, **caractérisé en ce que** la coupe du recouvrement de montant (10) dans la région autour de la découpe (16, 18) pour la charnière (12, 14) de la porte (6) du véhicule est réalisée avant que se produise, comme ci-dessus, le dégagement d'une partie (30, 32, 34, 36) du recouvrement (10) du montant.

11. Procédé pour remplacer un pare-brise d'un véhicule selon la revendication 10, **caractérisé en ce que** la coupe du recouvrement (10) de montant dans la région autour de la découpe (16, 18) a lieu comme ci-dessus au niveau d'un premier amincissement de matériau (20, 22).

12. Procédé pour remplacer un pare-brise d'un véhicule selon l'une quelconque des revendications 9 à 11, **caractérisé en ce que** le déplacement d'une partie (30, 32, 34, 36) du recouvrement (10) de montant depuis sa position d'origine et vers l'arrière a lieu, comme ci-dessus, le long d'un deuxième amincissement de matériau (24, 26, 40, 42) dans la région autour de la découpe (16, 18) pour la charnière (12, 14) de la porte (6) du véhicule de sorte que ledit deuxième amincissement de matériau (24, 26, 40, 42) sert de charnière.

13. Procédé pour remplacer un pare-brise d'un véhicule selon l'une quelconque des revendications 9 à 12, **caractérisé en ce que** lors du déplacement vers l'arrière précité le recouvrement (10) de montant est placé entre un montant (8) et une bande (28) afin de maintenir le recouvrement (10) de montant contre le montant (8).

14. Cabine de véhicule **caractérisée en ce qu'**elle comprend un recouvrement (10) de montant selon l'une quelconque des revendications 1 à 8.
